# EUROPÄISCHE PATENTSCHRIFT

(11) **EP 2 652 722 B1**
(45) Veröffentlichungstag und Bekanntmachung des Hinweises auf die Patenterteilung: **26.09.2018**
(21) Anmeldenummer: 11796941.0
(22) Anmeldetag: 30.11.2011
(51) Int. Cl.: G08G 1/0968, G01C 21/34

(54) **VERFAHREN UND VORRICHTUNG ZUM KOMPRIMIEREN VON ROUTENDATEN**
METHOD AND DEVICE FOR COMPRESSING ROUTE DATA
PROCÉDÉ ET DISPOSITIF DE COMPRESSION DE DONNÉES DE ROUTE

(30) Priorität: 17.12.2010 DE 102010063330
(43) Veröffentlichungstag der Anmeldung: 23.10.2013
(73) Patentinhaber: Bayerische Motoren Werke Aktiengesellschaft, 80809 München (DE)
(72) Erfinder: TAVA, Marcello Dr., 81369 München (DE); FEIT, Stefan, 80809 München (DE)
(86) Internationale Anmeldenummer: PCT/EP2011/071370
(87) Internationale Veröffentlichungsnummer: WO 2012/079984

(56) Entgegenhaltungen:
- EP-A1- 1 526 358
- EP-A1- 1 785 696
- WO-A1-2010/000706
- WO-A1-2011/127226
- WO-A2-2010/077225
- DE-A1- 19 539 641

## Beschreibung

Die Erfindung betrifft ein Verfahren und eine Vorrichtung zum Komprimieren von Routendaten.

In modernen Kraftfahrzeugen sind regelmäßig Navigationseinrichtungen vorgesehen. Diese ermöglichen ein Ermitteln einer Route zwischen einem Ausgangspunkt und einem Zielpunkt und dann eine Zielführung hin zu dem Zielpunkt unter Berücksichtigung einer aktuell ermittelten Position, die regelmäßig mittels eines GPS-Systems ermittelt wird.

Zunehmend sind Navigationseinrichtungen auch mit einer Kommunikationsschnittstelle ausgerüstet, die eine Kommunikation mit einer externen Rechnereinheit ermöglicht. Dabei erfolgt beispielsweise die Kommunikation über eine Mobilfunkschnittstelle und ein entsprechendes Mobilfunknetz, das auch mit dem Internet gekoppelt sein kann. Ein solches Navigationssystem, das neben der Navigationseinrichtung mit der ihr zugeordneten Kommunikationsschnittstelle auch eine externe Rechnereinheit umfasst, ermöglicht es beispielsweise eine vorgegebene Route, repräsentiert durch Routenelemente, zu der Navigationseinrichtung zu übertragen und dann dort zur Routenführung einzusetzen. Zu einer möglichst effizienten Übertragung der benötigen Information bezüglich der Route erfolgt bevorzugt eine Datenreduktion auf mehrere Routenelemente, die die Route möglichst eindeutig kennzeichnen. Diese jeweiligen Routenelemente können dann in der Navigationseinrichtung eingesetzt werden zum Rekonstruieren der Route und dann zur Zielführung von dem Ausgangspunkt zu dem vorgegebenen Ziel.

Die Offenlegungsschrift WO 2010/000706 A1 offenbart ein Verfahren zum Bestimmen eines Routenpfades von einer empfangenen geordneten Liste von Referenzpunkten, die Knoten in einer Kodierkarte repräsentieren und die eine ursprüngliche Route beschreiben. Dabei wird die Suche eines kürzesten Pfades zwischen den Referenzpunkten innerhalb der Dekodierkarte ausgeführt. Auf diese Weise soll die ursprüngliche Route rekonstruiert werden.

Die Aufgabe, die der Erfindung zugrunde liegt, ist es, ein Verfahren und eine Vorrichtung zum Komprimieren von Routendaten zu schaffen, das beziehungsweise die ein effizientes Komprimieren ermöglicht.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren und eine entsprechende Vorrichtung zum Komprimieren von Routendaten. Eine vorgegebene Route wird zur Verfügung gestellt, die mehrere die Route charakterisierende Routenelemente umfasst. Die Route kann beispielsweise derart zur Verfügung gestellt werden, dass sie über eine Kommunikationsschnittstelle empfangen wird und/oder aus einem Datenspeicher abgerufen wird.

Abhängig von einem vorgegebenen Teilungsparameter wird die zu komprimierende Route in Teilrouten aufgeteilt. Bezüglich der Teilrouten werden diejenigen Routenelemente als komprimierte Routenelemente ermittelt, die zu einer Rekonstruktion der jeweiligen Teilroute mittels einer Routenberechnung basierend auf einer Optimierung eines vorgegebenen Gütekriteriums benötigt werden. Einer komprimierten Route werden die komprimierten Routenelemente der Teilrouten zugeordnet.

Dem liegt die Erkenntnis zugrunde, dass durch das Aufteilen der vorgegebenen Route die Teilrouten die komprimierte Route mit einem regelmäßig deutlich reduzierten Rechenaufwand ermittelt werden kann und somit auch schneller ermittelt werden kann. Darüber hinaus kann gegebenenfalls auch das Ermitteln der jeweiligen komprimierten Routenelemente bezüglich der jeweiligen Teilrouten parallel durchgeführt werden.

Auf diese Weise kann insbesondere eine sehr hohe Effizienzsteigerung erreicht werden, da regelmäßig der Gesamtaufwand für das Ermitteln der komprimierten Routenelemente bezüglich aller Teilrouten deutlich geringer ist als der Aufwand für das Ermitteln entsprechender komprimierter Routenelemente direkt bezogen auf die vorgegebene Route. Dieser Vorteil kommt insbesondere stark zum Tragen bei einer langen Route, die regelmäßig entsprechend viele Routenelemente aufweist, und auch bei einer starken Abweichung der einzelnen Routenelemente der vorgegebenen Route bezogen auf diejenigen Routenelemente, die einer jeweiligen optimierten Route von den gleichen Ausgangs- und Zielpunkten zugeordnet sind, die hinsichtlich des vorgegebenen Gütekriteriums optimiert ist.

Die komprimierte Route kann beispielsweise in einem Speicher abgelegt werden und/oder über eine Kommunikationsschnittstelle beispielsweise einer Navigationseinrichtung, insbesondere in einem Fahrzeug, zur Verfügung gestellt werden.

Gemäß einer vorteilhaften Ausgestaltung charakterisiert das Gütekriterium eine Routenlänge. Auf diese Weise kann die komprimierte Route, insbesondere in einer Navigationseinrichtung, besonders zuverlässig rekonstruiert werden und zwar unabhängig von der Ausgestaltung der jeweiligen Navigationseinrichtung, da regelmäßig Navigationseinrichtungen über die Funktionalität verfügen eine Route mittels Optimierung der Routenlänge zu ermitteln. Dies ist insbesondere von Vorteil, da die Routenlänge einen objektiven Charakter hat, der von der eigenen Fahrweise nicht beeinflusst werden kann, im Gegensatz beispielsweise zu der Fahrgeschwindigkeit.

Wenn das Gütekriterium die Routenlänge charakterisiert, erfolgt bevorzugt eine Optimierung im Sinne eines Minimierens der Routenlänge.

Gemäß einer weiteren vorteilhaften Ausgestaltung repräsentiert der Teilungsparameter eine vorgegebene maximale Länge der jeweiligen Teilroute. Auf diese Weise können die Teilrouten besonders einfach ermittelt werden und zwar durch Aufteilen der vorgegebenen Route derart, dass die jeweiligen Teilrouten die vorgegebene maximale Länge nicht überschreiten.

Gemäß einer weiteren vorteilhaften Ausgestaltung wird der Teilungsparameter abhängig von einer lokalen Dichte des Straßennetzes in dem Bereich der jeweils zu ermittelnden Teilroute ermittelt. Auf diese Weise kann die Erkenntnis genutzt werden, dass die lokale Dichte des Straßennetzes repräsentativ ist für den zu erwartenden jeweiligen Rechenaufwand zum Ermitteln der der jeweiligen Teilroute zugeordneten komprimierten Routenelemente. So kann eine geeignete Aufteilung der vorgegebenen Route in die Teilrouten zu einer Minimierung des gesamten Rechenaufwandes durchgeführt werden.

Gemäß einer weiteren vorteilhaften Ausgestaltung wird der Teilungsparameter abhängig von einem Straßentyp in dem Bereich der jeweils zu ermittelnden Teilroute ermittelt. Auf diese Weise wird die Erkenntnis genutzt, dass der Straßentyp gegebenenfalls einen hohen Einfluss hat auf eine zu erwartende Abweichung des jeweiligen Teilabschnitts der vorgegeben Route von der in diesem Bereich sich ergebenden optimierten Route, die bezüglich des vorgegebenen Gütekriteriums optimiert ist.

So ist es beispielsweise eine Erkenntnis, dass wenn eine Route auf einen vorgegebenen Straßentyp wechselt ein typischer weiterer Verlauf der Route mit hoher Wahrscheinlichkeit zu erwarten ist. So ist beispielsweise dann, wenn eine Route ab einem bestimmten Routenelement eine Schnellstraße, insbesondere Autobahn, betrifft mit hoher Wahrscheinlichkeit zu erwarten, dass diese auf diesem Straßentyp für einen längeren Streckenabschnitt weiterführen wird. Somit kann dann auch für einen solchen Abschnitt der Teilungsparameter mit erhöhter maximaler Länge vorgegeben werden.

Ausführungsbeispiele der Erfindung sind im Folgenden anhand der schematischen Zeichnungen näher erläutert.

Es zeigen:
- Figur 1: ein Navigationssystem,
- Figur 2: ein Ablaufdiagramm eines Programms zum Komprimieren von Routendaten und
- Figur 3: eine beispielhafte Darstellung von Routenelementen.

Indizes sind bei den Bezugszeichen in den Figuren durch Unterstriche gekennzeichnet, wobei dann der nachfolgende Buchstabe oder die nachfolgende Zahl den jeweiligen Index repräsentiert.

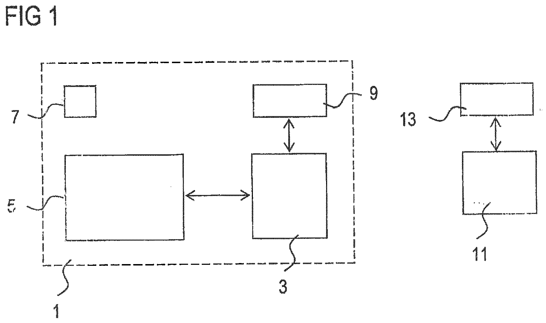

Ein Navigationssystem weist eine Navigationseinrichtung 1 (Figur 1) auf. Die Navigationseinrichtung 1 weist eine Rechnereinheit 3 auf, die bevorzugt einen Daten- und Programmspeicher und eine Recheneinheit aufweist. Die Recheneinheit ist dazu ausgebildet, die Programme, die in dem Speicher gespeichert sind, abzuarbeiten unter Nutzung gegebenenfalls ebenfalls dem Speicher abgespeicherter Daten.

Ferner umfasst die Navigationseinrichtung 1 auch eine Signalisierungseinheit 5, die beispielsweise als optische und/oder akustische Signalisierungseinheit ausgebildet sein kann.

Darüber hinaus ist der Navigationseinrichtung 1 eine Positionsbestimmungseinheit 7 zugeordnet, die beispielsweise einen GPS-Empfänger umfassen kann. Ferner ist der Navigationseinrichtung 1 eine Kommunikationsschnittstelle 9 zugeordnet. Die Kommunikationsschnittstelle 9 kann beispielsweise eine Mobilfunkschnittstelle umfassen. Sie kann alternativ oder zusätzlich jedoch auch beispielsweise eine drahtgebundene Schnittstelle, wie beispielsweise eine USB-Schnittstelle, umfassen. Sie kann beispielsweise ferner auch eine beliebige andere Kommunikationsschnittstelle 9 umfassen, wie beispielsweise eine Bluetooth-Schnittstelle. Beispielsweise ist die Navigationseinrichtung 1 in einem Fahrzeug angeordnet.

Darüber hinaus umfasst das Navigationssystem eine externe Rechnereinheit 11, der ebenfalls eine Kommunikationsschnittstelle 13 direkt oder indirekt zugeordnet ist, die dazu ausgebildet ist, mit der Kommunikationsschnittstelle 9 der Navigationseinrichtung 1 zu kommunizieren. Die externe Rechnereinheit 11 kann beispielsweise als so genannter Backendserver ausgebildet sein oder beispielsweise als ein Server eines entsprechenden Diensteanbieters ausgebildet sein.

Die externe Rechnereinheit 11 kann auch als Vorrichtung zum Komprimieren von Routendaten bezeichnet werden. Darüber hinaus kann alternativ oder zusätzlich auch die Rechnereinheit 3 der Navigationseinrichtung die Funktionalität der Vorrichtung zum Komprimieren von Routendaten aufweisen und als Vorrichtung zum Komprimieren von Routendaten bezeichnet werden.

Die externe Rechnereinheit 11 weist zumindest eine Recheneinheit, insbesondere mit einem Prozessor, und einen Daten- und/oder Programmspeicher auf.

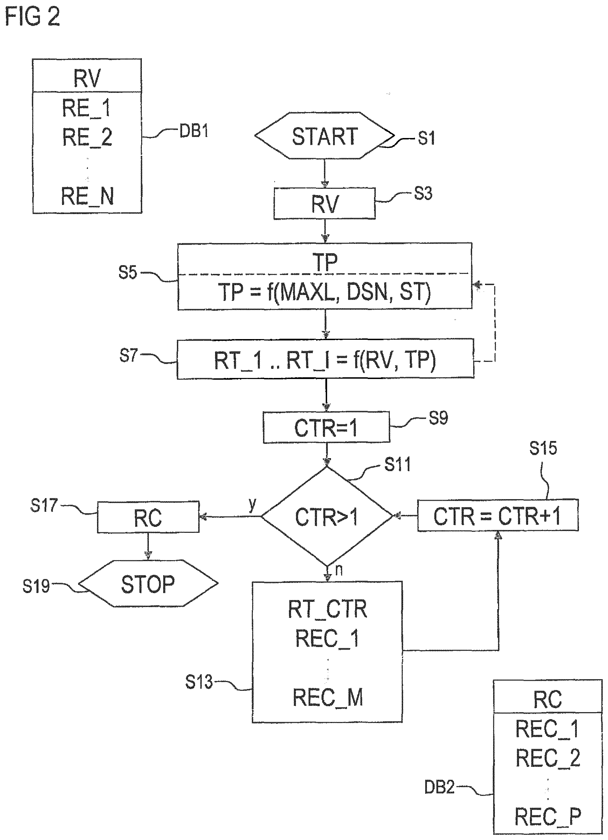

Ein Programm, das in dem Programmspeicher der externen Rechnereinheit abgespeichert ist und in der Recheneinheit während des Betriebs der externen Rechnereinheit 11 abgearbeitet wird, ist im Folgenden anhand der Figur 2 näher erläutert.

Das Programm wird in einem Schritt S1 (Figur 2) gestartet, in dem gegebenenfalls Variablen oder Parameter initialisiert werden.

In einem Schritt S3 wird eine vorgegebene Route RV zur Verfügung gestellt, die mehrere die Route charakterisierende Routenelemente RE umfasst. Die vorgegebene Route RV wird beispielsweise dadurch zur Verfügung gestellt, dass sie in der externen Rechnereinheit berechnet wird. Das zur Verfügungstellen der vorgegebenen Route RV kann auch beispielsweise durch Abrufen aus dem Datenspeicher der externen Rechnereinheit 11 erfolgen.

Die vorgegebene Route RV umfasst mehrere die Route charakterisierende Routenelemente RE, wobei N die Anzahl der Routenelemente RE der vorgegebene Route RV bezeichnet. Die Routenelemente können beispielsweise Knoten und/oder Verbindungselemente zwischen Knoten umfassen. Anhand des Datenblocks DB1 sind die der vorgegebene Route RV zugeordneten Routenelemente RE dargestellt.

In einem Schritt S5 wird ein Teilungsparameter TP ermittelt. Der Teilungsparameter kann fest vorgegeben sein und beispielsweise eine vorgegebene maximale Länge MAXL einer jeweiligen Teilroute RT repräsentieren. So kann er beispielsweise eine Länge von etwa 15 km repräsentieren. Dieser Wert ist jedoch lediglich als beispielhaft zu betrachten und kann auch andere Werte annehmen.

Darüber hinaus kann optional der Teilungsparameter TP abhängig von einer lokalen Dichte DSN des Straßennetzes in dem Bereich der jeweils zu ermittelnden Teilroute RT ermittelt werden. Dies erfolgt bevorzugt derart so, dass bei einer höheren lokalen Dichte DSN der Teilungsparameter einen geringeren Wert annimmt; also beispielsweise die vorgegebene maximale Länge MAXL entsprechend verringert ist. Der Teilungsparameter kann grundsätzlich neben einer reinen Längenvorgabe auch beispielsweise eine maximale Anzahl an Routenelementen repräsentieren, die die jeweilige Teilroute maximal aufweisen soll.

Der Teilungsparameter kann auch optional abhängig von einem Straßentyp ST in dem Bereich der jeweils zu ermittelnden Teilroute RT ermittelt werden. Er kann so abhängig von dem Straßentyp ST unterschiedliche Werte annehmen, wie dies beispielsweise oben anhand des Straßentyps der Schnellstraße, insbesondere Autobahn, weiter oben schon erläutert wurde. Der Teilungsparameter TP kann grundsätzlich mittels einer beliebigen Kombination der lokalen Dichte DSN und/oder des Straßentyps ST und/oder der maximalen vorgegebenen Länge MAXL und/oder der maximalen Anzahl an Routenelementen pro Teilroute RT ermittelt werden.

In einem Schritt S7 werden dann die jeweiligen Teilrouten RT ermittelt, wobei I die Anzahl der Teilrouten RT repräsentiert. Das Ermitteln der jeweiligen Teilrouten RT erfolgt abhängig von dem Teilungsparameter TP und der vorgegebenen Route RV. Somit umfassen die jeweiligen Teilrouten RT dann jeweils eine Untermenge der Routenelemente RE der vorgegebenen Route.

Der Teilungsparameter TP kann optional auch nach einer beliebigen Anzahl, wie beispielsweise eins, an ermittelten Teilrouten RT neu ermittelt werden, so dass in diesem Fall ein Rücksprung in den Schritt S5 erfolgt.

In einem Schritt S9 wird ein Zähler CTR mit einem Startwert vorbelegt, der beispielsweise eins betragen kann.

In einem Schritt S11 wird geprüft, ob der Zähler CTR einen Wert größer der Anzahl I der Teilrouten RT aufweist. Ist dies nicht der Fall, so werden in einem Schritt S13 bezüglich der jeweiligen Teilroute RT, die hier diejenige ist, die dem Zähler CTR entspricht, diejenigen Routenelemente RE als komprimierte Routenelemente REC ermittelt, die zu einer Rekonstruktion der jeweiligen Teilroute RT mittels einer Routenberechnung basierend auf einer Optimierung eines vorgegebenen Gütekriteriums benötigt werden. Der Schritt S13 kann ggf. einen eingebetteten iterativen Prozess erfordern.

Beispielsweise kann das Gütekriterium eine Routenlänge charakterisieren. Somit werden dann in dem Schritt S13 diejenigen Routenelemente RE als komprimierte Routenelemente REC ermittelt, die zur Rekonstruktion dieser jeweiligen Teilroute RT mittels einer Routenberechnung basierend auf einer Optimierung der Routenlänge benötigt werden also insbesondere einer Minimierung der Routenlänge benötigt werden.

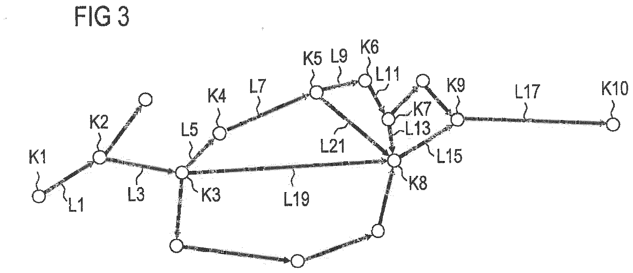

Das diesbezügliche Vorgehen ist dann noch weiter unten anhand der Figur 3 näher erläutert.

M bezeichnet die Anzahl der komprimierten Routenelemente REC der jeweiligen Teilroute RT.

In einem Schritt S15 wird anschließend der Zähler CTR vorgegeben inkrementiert, so insbesondere um den Wert eins. Anschließend wird die Bearbeitung in dem Schritt S11 fortgesetzt.

Ist die Bedingung des Schrittes S11 erfüllt, so wird in einem Schritt S17 eine komprimierte Route RC ermittelt, der die komprimierten Routenelemente REC der Teilrouten RT zugeordnet werden. Die komprimierte Route RC ist somit dann geeignet mittels einer Routenberechnung basierend auf der Optimierung des vorgegebenen Gütekriteriums, die vorgegebene Route RV wieder zu rekonstruieren. Grundsätzlich umfasst die komprimierte Route RC eine verringerte Anzahl an komprimierten Routenelementen im Vergleich zu der Anzahl N der Routenelemente RE der vorgegebenen Route. Die Anzahl der komprimierten Routenelemente REC der komprimierten Route RC ist mit P bezeichnet.

Die komprimierte Route ist in der Figur 2 anhand des Datenblocks DB2 dargestellt. Die komprimierte Route RC wird beispielsweise in dem Speicher der externen Rechnereinheit 11 gespeichert und kann beliebig über die Kommunikationsschnittstelle 13 der externen Rechnereinheit 11 zur Verfügung gestellt werden und beispielsweise an die Kommunikationsschnittstelle 9 der Navigationseinrichtung 1 übermittelt werden. Bevorzugt ist die Navigationseinrichtung 1 dazu ausgebildet entsprechend aus der komprimierten Route RC die vorgegebene Route RV zu rekonstruieren.

In einem Schritt S19 wird das Programm beendet.

In der Figur 3 sind verschiedene Routenelemente RE, die einen vorgegebenen Ausschnitt eines Straßennetzes repräsentieren dargestellt. Dabei umfassen die Routenelemente RE in der Figur 3 Knoten K1 bis K10 und Verbindungselemente L1 bis L21, welche jeweils Verbindung zwischen zwei benachbarten Knoten K1 bis K10 repräsentieren.

Die vorgegebene Route RV ist durch die Routenelemente RE gekennzeichnet. Beispielsweise können die Routenelemente RE die der vorgegebenen Route RV zugeordneten Knoten K1, K2, K3, K4, K5, K6, K7, K8, K9 und K10 sein. Dabei ist der Knoten K1 ein Startknoten und der Knoten K10 ein Zielknoten. Alternativ können die der vorgegebene Route RV zugeordneten Routenelemente auch die entsprechenden Verbindungselemente L1, L3, L5, L7, L9, L11, L13, L15 und L17 sein.

In dem Schritt S7 des Programms gemäß der Figur 2 wird die vorgegebene Route RV in die Teilrouten RT aufgeteilt. Dies hat beispielhaft zur Folge, dass eine erste Teilroute RT_1 die Knoten K1, K2 und K3 umfasst. Ferner umfasst eine zweite Teilroute RT_2 die Knoten K3, K4, K5, K6, K7 und K8. Ferner umfasst eine dritte Teilroute RT_3 die Knoten K8, K9 und K10.

Nachfolgend wird das Ermitteln der komprimierten Routenelemente REC anhand des Gütekriteriums der Routenlänge erläutert. Bezüglich der ersten Teilroute RT_1 sind diejenigen Routenelemente, die den Verlauf der kürzesten Route zwischen den Knoten K1 und K3 charakterisieren die Routenelemente K1, K2 und K3. Somit sind zur Rekonstruktion der ersten Teilroute RT_1 lediglich die Knoten K1 und K3 als komprimierte Routenelemente REC der ersten Teilroute RT_1 zuzuordnen.

Bezüglich der zweiten Teilroute RT_2 verläuft die kürzeste Route zwischen den Knoten K3 und K8 über das Verbindungselement L19. Allerdings weicht die zweite Teilroute RT_2 davon ab, so dass die kürzeste Route zwischen den Knoten K3 und K8 unter Berücksichtigung des Knotens K4 ermittelt wird. Die unter Berücksichtigung des Knotens K4 ermittelte kürzeste Route zwischen den Knoten K3 und K8 umfasst neben dem Knoten K4 den Knoten K5 der dann über das Verbindungselemente L21 zu dem Knoten K8 geführt ist. Dies repräsentiert jedoch nicht die zweiten Teilroute RT_2, so dass in einem weiteren Schritt die kürzeste Route zwischen den Knoten K3 und K8 unter Berücksichtigung der Knoten K4, K5 und K6 ermittelt wird. Die so ermittelte kürzeste Route umfasst die Punkte K3, K4, K5, K6, K7 und K8, die der zweiten Teilroute RT_2 entsprechen. Somit werden dann der zweiten Teilroute RT_2 als komprimierte Routenelemente REC die Knoten K3, K4, K6 und K8 zugeordnet.

Bezüglich der dritten Teilroute RT_3 weist die kürzeste Route die Knoten K8, K9 und K10 auf. Dies korrespondiert zu den Knoten der dritten Teilroute RT_3. Somit werden der dritten Teilroute RT_3 die Knoten K8 und K10 zugeordnet.

Die komprimierte Route RC umfasst dann die komprimierten Routenelemente REC und zwar die Knoten K1, K3, K4, K6, K8 und K10.

Der Rechenaufwand, der für die Ermittlung der komprimierten Routenelemente der Teilrouten RT_1, RT_2, RT_3 benötigt wird, ist regelmäßig deutlich geringer als derjenige Rechenaufwand, der aufgewendet werden müsste, wenn das Ermitteln der komprimierten Routenelemente ohne Aufteilen der vorgegebenen Route RV erfolgen würde.

### Bezugszeichenliste:

- 1: Navigationseinrichtung
- 3: Rechnereinheit
- 5: Signalisierungseinheit
- 7: Positionsbestimmungseinheit
- 9: Kommunikationsschnittstelle
- 11: externe Rechnereinheit
- 13: Kommunikationsschnittstelle
- RV: vorgegebene Route
- RE: Routenelement
- N: Anzahl der Routenelemente der vorgegebenen Route
- TP: Teilungsparameter
- MAXL: vorgegebene maximale Länge
- DSN: lokale Dichte des Straßennetzes
- ST: Straßentyp
- RT: Teilroute
- I: Anzahl der Teilrouten
- CTR: Zähler
- REC: komprimiertes Routenelement
- M: Anzahl der komprimierten Routenelemente der jeweiligen Teilroute
- RC: komprimierte Route
- P: Anzahl der komprimierten Routenelemente der komprimierten Route

## Patentansprüche

1. Verfahren zum Komprimieren von Routendaten, bei dem
- eine vorgegebene Route (RV) zur Verfügung gestellt wird, die mehrere die Route charakterisierende Routenelemente (RE) umfasst, **dadurch gekennzeichnet, dass**
- abhängig von einem vorgegebenen Teilungsparameter (TP) die vorgegebene Route (RV) in Teilrouten (RT) aufgeteilt wird,
- für jede Teilroute (RT) diejenigen Routenelemente (RE) als komprimierte Routenelemente (REC) ermittelt werden, die zu einer Rekonstruktion der jeweiligen Teilroute (RT) mittels einer Routenberechnung basierend auf einer Optimierung eines vorgegebenen Gütekriteriums benötigt werden,
- einer komprimierten Route (RC) die komprimierten Röutenelemente (REC) der Teilrouten (RT) zugeordnet werden.

2. Verfahren nach Anspruch 1, bei dem das Gütekriterium eine Routenlänge charakterisiert.

3. Verfahren nach einem der vorstehenden Ansprüche, bei dem der Teilungsparameter (TP) eine vorgegebene maximale Länge (MAXL) der jeweiligen Teilroute (RT) repräsentiert.

4. Verfahren nach einem der vorstehenden Ansprüche, bei dem der Teilungsparameter (TP) abhängig von einer lokalen Dichte (DSN) des Straßennetzes in dem Bereich der jeweils zu ermittelnden Teilroute (RT) ermittelt wird.

5. Verfahren nach einem der vorstehenden Ansprüche, bei dem der Teilungsparameter (TP) abhängig von einem Straßentyp (ST) in dem Bereich der jeweils zu ermittelnden Teilroute (RT) ermittelt wird.

6. Vorrichtung zum Komprimieren von Routendaten, die dazu ausgebildet ist
- eine vorgegebene Route (RV) zur Verfügung zu stellen, die mehrere die Route charakterisierende Routenelemente (RE) umfasst, **dadurch gekennzeichnet, dass**
- abhängig von einem vorgegebenen Teilungsparameter (TP) die vorgegebene Route (RV) in Teilrouten (RT) aufgeteilt wird,
- für jede Teilroute (RT) diejenigen Routenelemente (RE) als komprimierte Routenelemente (REC) ermittelt werden, die zu einer Rekonstruktion der jeweiligen Teilroute (RT) mittels einer Routenberechnung basierend auf einer Optimierung eines vorgegebenen Gütekriteriums benötigt werden,
- einer komprimierten Route (RC) die komprimierten Routenelemente (REC) der Teilrouten (RT) zugeordnet werden.

## Claims

1. A method for compressing route data, in which
- a predefined route (RV) is made available which comprises a plurality of route elements (RE) characterising the route, **characterised in that**
- the predefined route (RV) is divided into component routes (RT) depending on a predefined division parameter(TP),
- for each component route (RT), those route elements (RE) that are required for reconstruction of the particular component route (RT) by means of a route calculation on the basis of an optimisation of a predefined quality criterion are determined as compressed route elements (REC),
- the compressed route elements (REC) of the component routes (RT) are assigned to a compressed route (RC).

2. A method according to claim 1, in which the quality criterion characterises a route length.

3. A method according to either one of the preceding claims, in which the division parameter (TP) represents a predefined maximum length (MAXL) of the particular component route (RT).

4. A method according to any one of the preceding claims, in which the division parameter (TP) is determined depending on a local density (DSN) of the road network in the region of the component route (RT) that is to be determined.

5. A method according to any one of the preceding claims, in which the division parameter(TP) is determined depending on a road type (ST) in the region of the component route (RT) that is to be determined.

6. A device for compressing route data, which device is designed
- to make available a predefined route (RV) which comprises a plurality of route elements (RE) characterising the route,
**characterised in that**
- the predefined route (RV) is divided into component routes (RT) depending on a predefined division parameter (TP),
- for each component route (RT), those route elements (RE) that are required for reconstruction of the particular component route (RT) by means of a route calculation on the basis of an optimisation of a predefined quality criterion are determined as compressed route elements (REC),
- the compressed route elements (REC) of the component routes (RT) are assigned to a compressed route (RC).

## Revendications

1. Procédé permettant de comprimer des données de route selon lequel :
on se procure une route (RV) prédéfinie qui comprend plusieurs éléments de route (RE) caractérisant la route,
**caractérisé en ce que**
- la route (RV) prédéfinie est subdivisée en routes partielles (RT) en fonction d'un paramètre de subdivision (TP) prédéfini,
- pour chaque route partielle (RT) on détermine en tant qu'éléments de route comprimés (REC) les éléments de route (RE) qui sont nécessaires pour effectuer une reconstruction des différentes routes partielles (RT) au moyen d'un calcul de route sur le fondement d'une optimisation d'un critère de qualité prédéfini,
- on associe les éléments de route comprimés (REC) des routes partielles (RT) à une route (RC) comprimée.

2. Procédé conforme à la revendication 1,
selon lequel le critère de qualité caractérise une longueur de route.

3. Procédé conforme à l'une des revendications précédentes,
selon lequel le paramètre de subdivision (TP) représente une longueur maximum prédéfinie (MAXL) des différentes routes partielles (RT).

4. Procédé conforme à l'une des revendications précédentes,
selon lequel le paramètre de subdivision (TP) est déterminé en fonction de la densité locale (DSN) du réseau routier dans la zone de la route partielle respective (RT) à déterminer.

5. Procédé conforme à l'une des revendications précédentes,
selon lequel le paramètre de subdivision (TP) est déterminé en fonction du type de chaussée (ST) dans la zone de la route partielle respective (RT) à déterminer.

6. Dispositif permettant de comprimer des données de route qui est réalisé pour permettre :
- de se procurer une route prédéfinie (RV) qui comprend plusieurs éléments de route (RE) caractérisant la route,
**caractérisé en ce que**
la route prédéfinie (RV) est subdivisée en des routes partielles (RT) en fonction d'un paramètre de subdivision (TP) prédéfini,
pour chaque route partielle (RT), les éléments de route (RE) sont déterminés sous la forme d'éléments de route comprimés (REC) qui sont nécessaires pour une reconstruction des routes partielles (RT) respectives au moyen d'un calcul de route fondé sur l'optimisation d'un critère de qualité prédéfini,
les éléments de route comprimés (REC) des routes partielles (RT) sont associés à une route comprimée (RC).
